Europäisches Patentamt

European Patent Office

Office européen des brevets

(11) Publication number: **0 176 173
B1**

(12) **EUROPEAN PATENT SPECIFICATION**

(45) Date of publication of patent specification: **05.04.89**

(21) Application number: **85304354.5**

(22) Date of filing: **18.06.85**

(51) Int. Cl.⁴: **G 01 L 5/16,** G 01 L 5/22, G 01 L 1/22

(54) Sensor for sensing three orthogonal forces and three orthogonal moments.

(30) Priority: **27.09.84 JP 202734/84**

(43) Date of publication of application: **02.04.86 Bulletin 86/14**

(45) Publication of the grant of the patent: **05.04.89 Bulletin 89/14**

(84) Designated Contracting States: **DE FR GB IT SE**

(56) References cited:
EP-A-0 136 437
WO-A-84/02188
DE-A-2 122 924
US-A-4 094 192

(73) Proprietor: **KABUSHIKI KAISHA TOSHIBA 72, Horikawa-cho Saiwai-ku Kawasaki-shi Kanagawa-ken 210 (JP)**

(72) Inventor: **Iikura, Shoichi c/o Patent Division Kabushiki Kaisha Toshiba 1-1 Shibaura 1-chome Minato-ku Tokyo 105 (JP)**

(74) Representative: **Freed, Arthur Woolf et al MARKS & CLERK 57-60 Lincoln's Inn Fields London WC2A 3LS (GB)**

Courier Press, Leamington Spa, England.

## Description

This invention relates to a sensor for sensing three orthogonal forces and three orthogonal moments, which is attached to the wrist, etc., of robots to measure the three orthogonal forces and three orthogonal moments at that location and thus to control the load of the wrist, etc., with the use of these data items.

In the robots, it is necessary to provide a sensor on their wrist to measure forces and moments applying there and thus to control the load acting upon the wrist of the robot. In an othogonal coordinates system $(X, Y, Z)$ with the axis of the robot hand as the $Z$ axis, the sensor measures forces $F_X$, $F_Y$ and $F_Z$ of the $X$-, $Y$- and $Z$ axes and moments $M_X$, $M_Y$ and $M_Z$ around the $X$-, $Y$- and $Z$ axes.

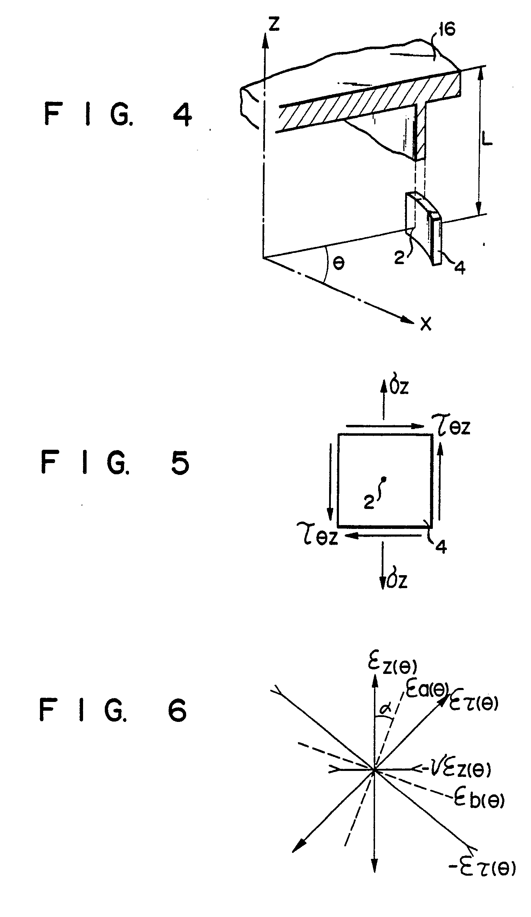

From Figure 4A of US—A—4 094 192 a compact sensor is known which uses three strain gage rosettes with three strain gages each.

It is an object of the invention to provide a sensor able to use a relatively simple calculation process.

This is achieved with a sensor according to claim 1.

This invention can be more fully understood from the following detailed description when taken in conjunction with the accompanying drawings, in which:

Fig. 1 is a perspective view showing a sensor according to an embodiment of this invention;

Fig. 2 is a cross-sectional view showing the sensor shown in Fig. 1;

Fig. 3 is a cross-sectional view showing the sensor shown in Fig. 1;

Fig. 4 is a fragmentary, perspective view in cross section showing the sensor shown in Fig. 1;

Fig. 5 is a diagram for explaining a stress acting upon a strain gage; and

Fig. 6 is a view showing the direction in which the strain gage is sensitive.

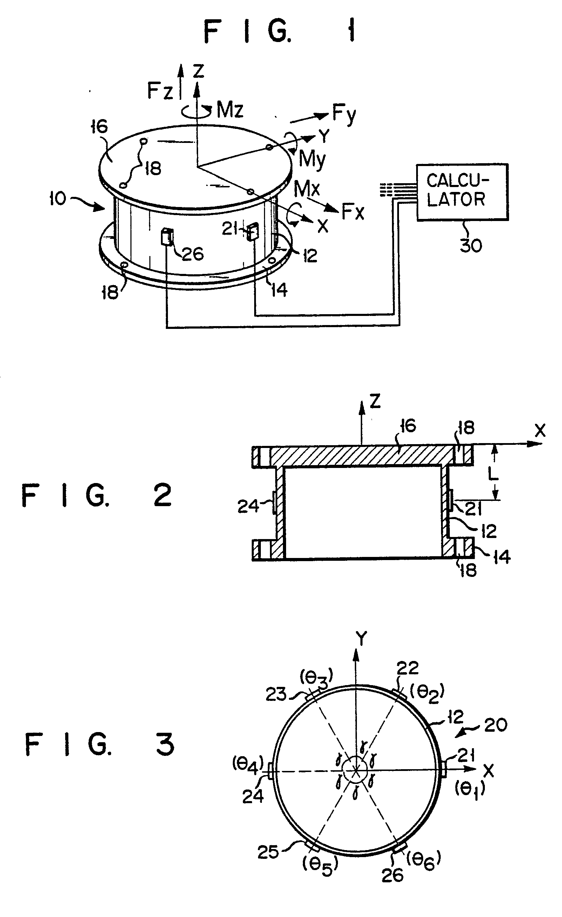

In Figs. 1, 2 and 3 are shown a sensor 10 according to a first embodiment of this invention. The sensor 10 is comprised of a strain detection section 12 of a thin-walled cylindrical configuration and a flange 14 provided on one longitudinal end of the detection section 12 and extending radially and outwardly of the detection section 12. An end plate 16 of a disc-like configuration is attached to the other end of the detection section 12 and has a diameter larger than that of the detection section 12. Bolt holes 18 for mounting are formed on the flange 14 and on the extending portion of the end plate 16. Through the bolt holes 18, the sensor 10 is bolted to a portion, such as the wrist of a robot, for which its load is detected. A deformation occurs at the strain detection section 12 according to the loads being applied to the flange 14 and end plate 16. The flange 14 and end plate 16 are thickly formed so as to provide a rigidity. On the other hand, the strain detection section 12 is thinly formed to allow the occurrence of a greater strain and thus to improve the SN (signal to noise) ratio.

Around the outer periphery of the strain detection section 12, six strain gages 20 (21, 22, 23, 24, 25, 26) are equidistantly attached to the detection section 12 along the outer periphery of the detection section 12. Thus, an angle made by the adjacent two strain gages with respect to the center of the detection section 12 is 60°. The respective strain gages detect strains at the locations of their attachments independently of each other. The outputs of the strain gages are supplied to the arithmetic calculator 30 where force components applied to the sensor 10 are calculated in the following way.

Here, an orthogonal coordinates system $(X, Y, Z)$ is adopted where the $Z$ axis represents a central axis of the detection section 12; the $X$ axis, a direction located perpendicular to the $Z$ axis and passing through the deformation gage 21; and the $Y$ axis, a direction perpendicular to the $Z$ and $X$ directions. From these force components (forces and moments) being applied to the sensor 10 can be expressed by forces $F_X$, $F_Y$, $F_Z$ acting in the corresponding directions and moments $M_X$, $M_Y$, $M_Z$ acting around the respective axial directions.

As shown in Fig. 4, in a plane perpendicular to the $Z$ axis, a minute element 4 is located in a direction made at an angle $\theta$ with respect to the $X$ axis. Stresses acting at two points on the minute element 4 are expressed by a normal stress $\sigma_z$ in the $Z$ axis direction and shear stress $\tau_{\theta z}$ as shown in Fig. 5. Since there is no pressure difference between the inside and outside of the detection section 12, no circumferential stress acts upon the minute element 4 and thus $\sigma_\theta$ is normally 0.

The axial stress $\sigma_z$ is expressed, as the function of the angle $\theta$, by Equation (1) below:

$$\sigma_z(\theta)=F_Z/S+\{(M_X-F_Y L)\sin\theta-(M_Y-F_X L)\cos\theta\}/Z \qquad (1)$$

where

S and Z: the lateral, cross-sectional area and section modulus, of the cylindrical section of the detection section 12; and

L: the distance between the end plate 16 and the minute element 4.

On the other hand, the shear stress $\tau_{\theta z}$ is expressed, as the function of the angle $\theta$ representing the position of the minute element 4, as follows:

$$\tau_{\theta z}(\theta)=M_Z/rS+(F_Y\cos^2\theta-F_X\sin^2\theta)/\pi rt(0\leq\theta\leq\pi/2) \qquad (2)$$

$$\tau_{\theta z}(\theta)=M_Z/rS-(F_Y\cos^2\theta+F_X\sin^2\theta)/\pi rt(\pi/2\leq\theta\leq\pi) \qquad (3)$$

$$\tau_{\theta z}(\theta)=M_Z/rS-F_Y\cos^2\theta-F_X\sin^2\theta)/\pi rt(\pi\leq\theta\leq 3\pi/2) \qquad (4)$$

$$\tau_{\theta z}(\theta)=M_Z/rS+F_Y\cos^2\theta+F_X\sin^2\theta)/\pi rt(3\pi/2\leq\theta\leq 2\pi) \qquad (5)$$

2

In this way, $\sigma_Z$ is the function of $F_X$, $F_Y$, $F_Z$, $M_X$ and $M_Y$ and $\tau_{\theta z}$ is the function of $F_X$, $F_Y$ and $M_Z$. If, therefore, only $\tau_{\theta z}$ of three $\theta$'s (for example, $\theta_1$, $\theta_3$, $\theta_5$) are detected, then three ($F_X$, $F_Y$ and $M_Z$) of six force components are found from Equations (2) to (5). If only $\sigma_Z$ of the remaining three $\theta$'s ($\theta_2$, $\theta_4$, $\theta_6$) is detected, it is possible to find the remaining $F_X$, $M_X$ and $M_Y$ from Equation (1), since $F_X$, $F_Y$ and $M_Z$ are already known. In this case, in order to find only the normal stress $\sigma_Z$ in the Z axis direction, the strain gages 22 ($\theta_2$), 24($\theta_4$) and 26($\theta_6$) are so attached to the detection section 12 that their strain-sensitive direction is the Z direction. Then, the normal stress $\sigma_Z$ is found from Equation (6) below.

$$\sigma_Z(\theta)=E \cdot \varepsilon_Z(\theta) \tag{6}$$

On the other hand, in order to find only the shear stress $\tau_{\theta z}$, the strain gages 21($\theta_1$), 23($\theta_3$) and 25($\theta_5$) are so attached to the detection section 12 that their strain-sensitive direction is 45°-inclined with respect to the Z-axis direction. In this case, it is only necessary to find, from Equation (7) below, the normal strain which is produced in the 45° direction.

$$\tau_{\theta z}(\theta)=2G \cdot \varepsilon_T(\theta) \tag{7}$$

where E and G stand for the young's modulus and shear modulus, respectively.

Where only the shear stress is to be found, merely attaching the strain gage to the detection section 12 at an angle 45°-inclined to the axial direction will result in the axial strain component of Equation (1) being contained in the strain detection quantity. Therefore, a two-gage method using two gages in an orthogonal array is employed to detect strain. By so doing, the axial strain component is cancelled and it is therefore possible to detect strain only in the 45°-inclined direction.

If stress (and thus stress) is to be detected using such orthogonal gages, the strain components, which vary depending upon the temperature, cancel each other and it is possible to obtain a detection value free from strain components resulting from the temperature variation. It is therefore preferable that, in order to obtain a temperature-compensated measured value, not only a strain in the 45°-inclined direction but also a strain in the Z-axis direction be measured using the orthogonal gages. Where use is made of the orthogonal gages, an amount of strain in the 45°-inclined direction can be detected as double the strain amount and an amount of strain (axial, perpendicular stress) in the Z-axis direction can be detected as $(1+v)$ times the strain amount, noting that v is the poisson's ratio.

In order to further improve the detection sensitivity, it is only necessary to attach the respective orthogonal gages to the inner surface and outer peripheral surface of the cylindrical detection section 12. When this is done, an amount of strain is amplified to four times the strain amount in the 45°-inclined direction and to $2(1+v)$ times the strain amount in the Z-axis direction. Actually, it is considered that there are manufacturing and strain gage attaching errors. It is, therefore, preferable to, through the application of known loads or moment to the sensor, find a conversion equation from a relation of the known loads or moment to the actual measured value and evaluate a measured value from the conversion equation.

According to the sensor thus constructed, forces and moments ($F_X$, $F_Y$, $F_Z$, $M_X$, $M_Y$ and $M_Z$) applied at the respective locations of the sensor 10 can be readily evaluated through a simple calculation with the use of six strain gages attached to the sensor. This sensor is simpler in its structure and it is possible to selectively determine the attaching position, dimension, etc. of the sensor 10. It is also possible to dispose the detection circuit, etc. on the inner surface of the cylindrical detection section 12. This sesnor 10 finds a wider application.

Another embodiment of this invention will be described below.

In the first embodiment, the three of the six strain gages are so arranged that their strain detection direction is the Z-axis direction with the detection direction of the other three strain gages 45°-inclined with respect to the Z axis. This arrangement permits the separate detection of the X-direction normal stress and shear stress. In the second embodiment, on the other hand, gages in an orthogonal array are used as strain gages 21, 22, 23, 24, 25 and 26 and, as shown in Fig. 6, the detection direction of the respective strain gages is inclined from the Z-axis by an angle $\alpha$ ($0<\alpha<45°$). In the second embodiment, the detection value of the respective strain gages contains all the strains resulting from the six force components ($F_X$, $F_Y$, $F_Z$, $M_X$, $M_Y$ and $M_Z$). In other words, in this embodiment, the strain resulting from the six force components is intentionally contained in the detection value by inclining the detection direction of the respective gages by the angle $\alpha$.

The respective two outputs of the six strain gages 21, 22, 23, 24, 25 and 26 so attached to the sensor 10 are expressed by Equations (8) and (9) below:

$$\varepsilon a(\theta)=\varepsilon_Z(\theta)(\cos\alpha-v\sin\alpha)+E_T(\theta)(\cos(\pi/4-\alpha)-\sin(\pi/4-\alpha))+\varepsilon\Delta T \tag{8}$$

$$\varepsilon b(\theta)=\varepsilon_Z(\theta)(-v\cos\alpha+\sin\alpha)+\varepsilon_T(\theta)\{\sin(\pi/4-\alpha)-\cos(\pi/4-\alpha)\}+\varepsilon\Delta T \tag{9}$$

As the output of the respective gages, $\varepsilon(\theta)=\varepsilon a(\theta)-\varepsilon b(\theta)$ is produced, noting that, as evident from Equations (8) and (9), the strain component $\varepsilon\Delta T$ resulting from a variation of temperature is not contained in $\varepsilon(\theta)$. With the angle $\alpha$ set to be 0, $\varepsilon(0)=(1+v)\varepsilon_Z$. With the angle $\alpha$ set to be 45°, $\varepsilon(45)=2 \cdot \varepsilon_T$. The axial

normal stress $\sigma_z$ and shear stress $\tau_{\theta z}$ can be found from Equations (6) and (7) by detecting the strain $\varepsilon(0)$ in the Z-axis direction and strain $\varepsilon(45)$ in the 45°-inclined direction. This is a principal on which the force components are calculated in the first embodiment.

With the second embodiment, on the other hand, since the angle $\alpha$ is not 0° and 45°, both $\varepsilon_z$ and $\tau_{\theta z}$ are contained in $\varepsilon(\theta)=\varepsilon a(\theta)-\varepsilon b(\theta)$. Thus, the respective gages, since being six in number, can produce the following outputs:

$$\varepsilon(\theta_1)=\varepsilon 1; \quad \varepsilon(\theta_2)=\varepsilon 2; \quad \varepsilon(\theta_3)=\varepsilon 3$$

$$\varepsilon(\theta_4)=\varepsilon 4; \quad \varepsilon(\theta_5)=\varepsilon 5; \quad \varepsilon(\theta_6)=\varepsilon 6.$$

Substituting Equations (6) and (7) into Equations (8) and (9), six relational expressions are obtained between the outputs of the strain gages and the respective six unknown quantities $\sigma_z(\theta)$ and $\tau_{\theta z}(\theta)[\theta=\theta_1...\theta_6]$. The relations as shown in Equations (1) to (5) exist between the force components $F_X$, $F_Y$, $F_Z$, $M_X$, $M_Y$, $M_Z$ and the $\sigma_z(\theta)$ and $\tau_{\theta z}(\theta)[\theta=\theta_1...\theta_6]$. In consequence, a linear relation given by Equation (10) below is obtained between the outputs of the six strain gages and the sixth force components:

$$(\varepsilon_1, \varepsilon_2, \varepsilon_3, \varepsilon_4, \varepsilon_5, \varepsilon_6)^T=[B] \cdot (F_X, F_Y, F_Z, M_X, M_Y, M_Z)^T \tag{10}$$

where

T: the transposed vector

[B]: the (6×6) matrix of coefficients

By applying an individual force component to the sensor, the relation between the force components and the outputs of the strain gages is found for the respective force component and the respective element can be evaluated from the relation through a calibration.

According to the second embodiment, six force components $F_X$, $F_Y$, $F_Z$, $M_X$, $M_Y$ and $M_Z$ can be found through a simple matrix calculation all at one time from the outputs $\varepsilon_1$, $\varepsilon_2$, $\varepsilon_3$, $\varepsilon_4$, $\varepsilon_5$, $\varepsilon_6$ of the six strain gages which are equidistantly attached in six places to the outer periphery of the cylindrical detection section 12. In the second embodiment, it is not necessary to adopt any particular design, such as adjusting the strain-sensitive direction of the strain gages, so as to individually detect the normal stress in the Z-axis direction and shear stress. For this reason, the sensor structure becomes more simplified and finds a wider range of practical application.

This invention is not restricted to the above-mentioned embodiments. The method for detecting deformations at six places on the detection section is not restricted to the above-mentioned two-gage method. It is also possible to use another proper method, such as a four-gage method. In the above-mentioned embodiments, the gages are equidistantly located at six places on the outer periphery of the detection section. This is because a high independence of each strain gage is assured with respect to the other strain gages. If, however, the respective strain gages are arranged on the inner periphery of the detection section, it is still possible to obtain the six force components. Furthermore, the singular point of the strain detection value can be avoided by arranging adjacent strain gages to the detection section in the longitudinal direction of the detection section. In this way, a variety of changes and modifications can be made without departing from the spirit and scope of this invention as claimed.

## Claims

1. A sensor for sensing three orthogonal forces and three orthogonal moments, comprising:
a detection section (12) of a thin walled cylindrical shape which produces strain when a load is applied to it, and
six strain gages (21, 22, 23, 24, 25, 26) spaced in the circumferential direction of the detection section, and
an arithmetic device (30) which calculates from one output of each of the six strain gages, said forces and moments which are applied to the detection section.

2. A sensor according to claim 1, characterized in that, in an orthogonal coordinates system (X, Y, Z) where the Z-axis is in the axial direction of said detection section and X, and Y-axes are perpendicular to each other and to the Z-axis, said forces act in the X-, Y- and Z-axis directions and said moments act around the X-, Y- and Z-axis respectively.

3. A sensor according to claim 2, characterized in that said six strain gages (21, 22, 23, 24, 25, 26) are arranged equidistantly on said detection section (12).

4. A sensor according to claim 2, characterized in that these strain gages (21, 23, 25) are of an orthogonal two gage type, each of which have their strain direction 45°-inclined with respect to the Z-axis and the remaining strain gages (22, 24, 26) are arranged in a direction parallel to the Z-axis; and only a shear stress $\tau_{\theta z}$ is found from the outputs $\varepsilon_1$, $\varepsilon_3$, and $\varepsilon_5$ of the strain gages in the 45°-inclined direction and only a normal stress $\sigma_z$ in the Z-axis direction is found from the outputs $\varepsilon_2$, $\varepsilon_4$ and $\varepsilon_6$ of the strain gages in the Z-axis direction.

5. A sensor according to claim 4, characterized in that said arithmetic calculator (30) calculates six force components from equations (1) to (5) below:

$$\sigma_Z(\theta) = F_Z/S + \{(M_X - F_Y L)\sin e - [M_Y - F_X L)\cos\theta\}/Z \qquad (1)$$

$$\tau_{\theta Z}(\theta) = M_Z/rS + (F_Y \cos^2\theta - F_X \sin^2\theta)/\pi rt (0 \leqq \theta \leqq \pi/2) \qquad (2)$$

$$\tau_{\theta Z}(\theta) = M_Z/rS - (F_Y \cos^2\theta + F_X \sin^2\theta)/\pi rt (\pi/2 \leqq \theta \leqq \pi) \qquad (3)$$

$$\tau_{\theta Z}(\theta) = M_Z/rS - (F_Y \cos^2\theta - F_X \sin^2\theta)/\pi rt (\pi \leqq \theta \leqq 3\pi/2) \qquad (4)$$

$$\tau_{\theta Z}(\theta) = M_Z/rS + (F_Y \cos^2\theta + F_X \sin^2\theta)/\pi rt (3\pi/2 \leqq \theta \leqq 2\pi) \qquad (5)$$

where

S and Z: the lateral cross-sectional area and section modulus of the cylindrical portion of said detection sections and

L: a constant showing the position of the strain gage.

6. A sensor according to claim 5, characterized in that said arithmetic calculator (30) calculates three force components $F_X$, $F_Y$ and $M_Z$ from three measured values for the shear stress $\tau_{\theta Z}$ on the basis of said equations (2) to (5) and calculates the remaining force components $F_X$, $M_X$ and $M_Y$ from three measured values for the normal stress $\sigma_Z$ on the basis of the equation (1).

7. A sensor according to claim 2, characterized in that each of the strain gages is of an orthogonal two-gage type.

8. A sensor according to claim 2, characterized in that the six strain gages (21, 22, 23, 24, 25, 26) are of a four-gage type and are arranged three on the inner periphery surface and three on the outer periphery surface of said detection section (12).

9. A sensor according to claim 2, characterized in that the respective strain gages (21, 22, 23, 24, 25, 26) are of an orthogonal two-gage type and are arranged on the detection section (12) such that their strain detection direction is inclined at an angle $\alpha$ of $0 < \alpha < 45°$ with respect to the Z-axis.

10. A sensor according to claim 9, characterized in that the output $\varepsilon(\theta)$ of the respective strain gage (21, 22, 23, 24, 25, 26) is obtained as a difference between two outputs $\varepsilon a(\theta)$ and $\varepsilon b(\theta)$ and the outputs $\varepsilon_1$, $\varepsilon_2$, $\varepsilon_3$, $\varepsilon_4$, $\varepsilon_5$ and $\varepsilon_6$ of the six strain gages $(\theta = \theta_1, \theta_2, \theta_3, \theta_4, \theta_5, \theta_6)$ are found through the calculation of the following matrix equation:

$$(\varepsilon_1, \varepsilon_2, \varepsilon_3, \varepsilon_4, \varepsilon_5, \varepsilon_6)^T = [B] \cdot (F_X, F_Y, F_Z, M_X, M_Y, M_Z)^T$$

where

[B]: a (6×6) matrix of coefficient

T: a transposed vector.

11. A sensor according to claim 10, characterized in that said matrix of coefficient is found based on the output of the respective gages (21, 22, 23, 24, 25, 26) through the application of known force components to the detection section (12).


## Patentansprüche

1. Fühleranordnung zum Messen von drei (zueinander) senkrechten Kräften und drei (zueinander) senkrechten Momenten, umfassend:

einen Meßfühler- oder Detektorteil (12) einer dünnwandigen, zylindrischen Form, der bei Beaufschlagung mit einer Last oder Belastung eine (mechanische) Spannung bzw. Drehung erzeugt, und

sechs in Umfangsrichtung des Detektorteils auf Abstände verteilte Dehnungsmeßstreifen (21, 22, 23, 24, 25, 26) sowie

eine Rechenvorrichtung (30), die anhand eines Ausgangssignals jedes der sechs Dehnungsmeßstreifen die auf den Detektorteil einwirkenden Kräfte und Momente berechnet.

2. Fühleranordnung nach Anspruch 1, dadurch gekennzeichnet, daß in einem orthogonalen Koordinatensystem (X, Y, Z), in welchem die Z-Achse in Axialrichtung verläuft und die X- und Y-Achsen zueinander und zur Z-Achse senkrecht liegen, die Kräfte in den X-, Y- und Z-Achsenrichtungen und die Momente um die X-, Y- bzw. Z-Achse herum wirken.

3. Fühleranordnung nach Anspruch 2, dadurch gekennzeichnet, daß die sechs Dehnungsmeßstreifen (21, 22, 23, 24, 25, 26) auf gleiche (getenseitige) Abstände verteilt am Detektorteil (12) angeordnet sind.

4. Fühleranordnung nach Anspruch 2, dadurch gekennzeichnet daß drei Drehnungsmeßstreifen (21, 23, 25) von einem orthogonalen Doppelmeßstreifentyp sind, deren Spannungsrichtung jeweils um 45° zur Z-Achse geneigt ist, und die restlichen Dehnungsmeßstreifen (22, 24, 26) in einer Richtung parallel zur Z-Achse angeordnet sind, und daß lediglich eine (elastische) Scherspannung $\tau_{\theta Z}$ anhand der Ausgangssignale $\varepsilon_1$, $\varepsilon_3$ und $\varepsilon_5$ der Drehnungsmeßstreifen in der 45°-Neigungsrichtung und lediglich eine

normale (elastische) Spannung $\sigma_Z$ in der Z-Achsenrichtung anhand der Ausgangssignale $\varepsilon_2$, $\varepsilon_4$ und $\varepsilon_6$ der Dehnungsmeßstreifen in Z-Achsenrichtung ermittelt werden.

5. Fühleranordnung nach Anspruch 4, dadurch gekennzeichnet, daß die (arithmetische) Rechenvorrichtung (30) sechs Kraftkomponenten anhand der nachstrehenden Gleichungen (1) bis (5) bereichnet:

$$\sigma_Z(\theta)=f_Z/S+\{(M_X-F_YL)\sin e-(M_Y-F_XL)\cos e\}/Z \qquad (1)$$

$$\tau_{\theta z}(\theta)=M_Z/rS+F_Y\cos^2\theta-F_X\sin^2\theta)/\pi rt(0\leqq\theta\leqq\pi/2) \qquad (2)$$

$$\tau_{\theta z}(\theta)=M_Z/rS-(F_Y\cos^2\theta+F_X\sin^2\theta)/\pi rt(\pi/2\leqq\theta\leqq\pi) \qquad (3)$$

$$\tau_{\theta z}(\theta)=M_Z/rS-(F_Y\cos^2\theta-F_X\sin^2\theta)/\pi rt(\pi\leqq\theta\leqq3\pi/2) \qquad (4)$$

$$\tau_{\theta z}(\theta)=M_Z/rS+F_Y\cos^2\theta+F_X\sin^2\theta)/\pi rt(3\pi/2\leqq\theta\leqq2\pi) \qquad (5)$$

worin bedeuten:

S und Z=seitliche Querschnittsfläche und Widerstandsmoment des zylindrisches Abschnitts des Detektorteils und

L=eine die Lage des Dehnungsmeßstreifens angebende Konstante.

6. Fühleranordnung nach Anspruch 5, dadurch gekennzeichnet, daß die Rechenvorrichtung (30) drei Kraftkomponenten $F_X$, $F_Y$ und $M_Z$ anhand der drei Meßwerte für die Scherspannung $\tau_{\theta z}$ auf der Grundlage der Gleichungen (2) bis (5) und die restlichen Kraftkomponenten $F_X$, $M_X$ und $M_Y$ anhand der drei Meßwerte für die normale Spannung $\sigma_Z$ auf der Grundlage von Gleichung (1) berechnet.

7. Fühleranordnung nach Anspruch 2, dadurch gekennzeichnet, daß jeder Dehnungsmeßstreifen von einem orthogonalen Doppelmeßstreifentyp ist.

8. Fühleranordnung nach Anspruch 2, dadurch gekennzeichnet, daß die sechs Dehnungsmeßstreifen (21, 22, 23, 24, 25, 26) von einem Vierfachmeßstreifentyp und so angeordnet sind, daß sich drei (Dehnungsmeßstreifen) an der Innenumfangsfläche und drei an der Außenumfangsfläche des Detektorteils (12) befinden.

9. Fühleranordnung nach Anspruch 2, dadurch gekennzeichnet, daß die jeweiligen Dehnungsmeßstreifen (21, 22, 23, 24, 25, 26) von einem orthogonalen Doppelmeßstreifentyp und am Detektorteil (12) so anordnet sind, daß ihre Dehnungsmeßrichtung unter einem Winkel $\alpha$ von $0<\alpha<45°$ zur Z-Achse geneigt ist.

10. Fühleranordnung nach Anspruch 9, dadurch gekennzeichnet, daß das Ausgangssignal $\varepsilon(\theta)$ des betreffenden Dehnungsmeßstreifens (21, 22, 23, 24, 25, 26) als Differenz zwischen zwei Ausgangssignalen $\varepsilon a(\theta)$ und $\varepsilon b(\theta)$ erhalten oder abgeleitet wird und die Ausgangssignale $\varepsilon_1$, $\varepsilon_2$, $\varepsilon_3$, $\varepsilon_4$, $\varepsilon_5$ und $\varepsilon_6$ der sechs Dehnungsmeßstreifen ($\theta=\theta_1$, $\theta_2$, $\theta_3$, $\theta_4$, $\theta_5$, $\theta_6$) ermittelt werden durch Berechnung (Auflösung) der folgenden Matrixgleichung:

$$(\varepsilon_1, \varepsilon_2, \varepsilon_3, \varepsilon_4, \varepsilon_5, \varepsilon_6)^T=[B]\cdot(F_X, F_Y, F_Z, M_X, M_Y, M_Z)^T$$

worin bedeuten:

[B]=eine (6×6)-Koeffizientenmatrix (und)

T=ein transponierter Vektor.

11. Fühleranordnung nach Anspruch 10, dadurch gekennzeichnet, daß die Koefficientenmatrix auf der Grundlage des Ausgangssignals von den betreffenden Dehnungsmeßstreifen (21, 22, 23, 24, 25, 26) durch Anlegung bekannter Kraftkomponenten an den Detektorteil (12) ermittelt wird.

**Revendications**

1. Un capteur destiné à détecter trois forces orthogonales et trois moments orthogonaux, comprenant:

une section de détection (12) ayant une forme cylindrique à paroi mince qui manifests une déformation lorsqu'une charge lui est appliquée, et

six extensomètres (21, 22, 23, 24, 25, 26) espacés dans la direction de la circonférence de la section de détection, et

un dispositif arithmétique (30) qui, à partir d'un signal de sortie de chacun des six extensomètres, calcule les forces et les moments qui sont appliqués à la section de détection.

2. Un capteur selon la revendication 1, caractérisé en ce que, dans un système de coordonnées orthogonal (X, Y, Z) dans lequel l'axe Z est orienté dans la direction axiale de la section de détection, et les axes X et Y sont perpendiculaires entre eux et à l'axe Z, les forces précitées agissent dans les directions des axes X, Y et Z, et les moments précités agissent respectivement autour des axes X, Y et Z.

3. Un capteur selon la revendication 2, caractérisé en ce que les six extensomètres (21, 22, 23, 24, 25, 26) sont disposés de façon équidistante sur la section de détection (12).

4. Un capteur selon la revendication 2, caractérisé en ce que trois extensomètres (21, 23, 25) sont d'un type à deux extensomètres orthogonaux, chacun d'eux ayant sa direction de détection de déformation inclinée à 45° par rapport à l'axe Z, et les extensomètres restants (22, 24, 26) sont disposés dans une direction perpendiculaire à l'axe Z; et seule une contrainte tangentielle $\tau_{\theta z}$ est déterminée à partir des signaux de sortie $\varepsilon_1$, $\varepsilon_3$ et $\varepsilon_5$ des extensomètres orientés dans la direction inclinée à 45°, et seule une contrainte normale $\sigma_z$ dans la direction de l'axe Z est déterminée à partir des signaux de sortie $\varepsilon_2$, $\varepsilon_4$ et $\varepsilon_6$ des extensomètres qui sont orientés dans la direction de l'axe Z.

5. Un capteur selon la revendication 4, caractérisé en ce que le calculateur arithmétique (30) calcule six composantes de forces à partir des Equations (1) à (5) suivantes:

$$\sigma_z(\theta)=F_z/S+\{(M_X-F_YL)\sin\theta-(M_Y-F_XL)\cos\theta\}/Z \tag{1}$$

$$\tau_{\theta z}(\theta)=M_z/rS+(F_Y\cos^2\theta-F_X\sin^2\theta)/\pi rt(0\leqq\theta\leqq\pi/2) \tag{2}$$

$$\tau_{\theta z}(\theta)=M_z/rS-F_Y\cos^2\theta+F_X\sin^2\theta)/\pi rt(\pi/2\leqq\theta\leqq\pi) \tag{3}$$

$$\tau_{\theta z}(\theta)=M_z/rS-(F_Y\cos^2\theta-F_X\sin^2\theta)\pi rt(\pi\leqq\theta\leqq3\pi/2) \tag{4}$$

$$\tau_{\theta z}(\theta)=M_z/rS+(F_Y\cos^2\theta+F_X\sin^2\theta)/\pi rt(3\pi/2\leqq\theta\leqq2\pi) \tag{5}$$

dans laquelles

S et Z: aire de section droite latérale et moment résistant de la partie cylindrique de la section de détection; et

L: constante indiquant la position de l'extensomètre.

6. Un capteur selon la revendication 5, caractérisé en ce que le calculateur arithmétique (30) calcule trois composantes de forces $F_X$, $F_Y$ et $M_z$ à partir de trois valeurs mesurées pour la contrainte tangentielle $\tau_{\theta z}$, sur la base des équations (Z) à (5), et il calcule les composantes de forces restantes $F_X$, $M_X$ et $M_Y$ à partir de trois valeurs mesurées pour la contrainte normale $\sigma_z$, sur la base de l'équation (1).

7. Un capteur selon la revendication 2, caractérisé en ce que chacun des extensomètres est d'un type à deux extensomètres orthogonaux.

8. Un capteur selon la revendication 2, caractérisé en ce que les six extensomètres (21, 22, 23, 24, 25, 26) sont chacun d'un type à quatre extensomètres, et ils sont disposés à raison de trois sur la surface périphérique intérieure et de trois sur la surface périphérique extérieure de la section de détection (12).

9. Un capteur selon la revendication 2, caractérisé en ce que les extensomètres respectifs (21, 22, 23, 24, 25, 26) sont chacun d'un type à deux extensomètres orthogonaux, et ils sont disposés sur la section de détection (12) de façon que leur direction de détection de déformation soit inclinée par rapport à l'axe Z d'un angle $\alpha$ satisfaisant la relation $0<\alpha<45°$.

10. Un capteur selon la revendication 9, caractérisé en ce que le signal de sortie $\varepsilon(\theta)$ de l'extensomètre respectif (21, 22, 23, 24, 25, 26) est obtenu sous la forme d'une différence entre deux signaux de sortie $\varepsilon a(\theta)$ et $\varepsilon b(\theta)$, et les signaux de sortie $\varepsilon_1$, $\varepsilon_2$, $\varepsilon_3$, $\varepsilon_4$, $\varepsilon_5$, et $\varepsilon_6$ des six extensomètres ($\theta=\theta_1$, $\theta_2$, $\theta_3$, $\theta_4$, $\theta_5$, $\theta_6$) sont déterminés par la résolution de l'équation matricielle suivante:

$$(\varepsilon_1, \varepsilon_2, \varepsilon_3, \varepsilon_4, \varepsilon_5, \varepsilon_6)^T=[B]\cdot(F_X, F_Y, F_Z, M_X, M_Y, M_Z)^T$$

dans laquelle.

[B]: matrice de coefficients de dimensions (6×6)

T: vecteur transposé.

11. Un capteur selon la revendication 10, caractérisé en ce qu'on détermine la matrice de coefficients sur la base des signaux de sortie des extensomètres respectifs (21, 22, 23, 24, 25, 26), par l'application de composantes de forces connues à la section de détection (12).

# F I G.  1

# F I G.  2

# F I G.  3

1

F I G. 4

F I G. 5

F I G. 6